(19) Europäisches Patentamt / European Patent Office / Office européen des brevets

(11) **EP 3 341 338 B1**

(12) **EUROPÄISCHE PATENTSCHRIFT**

(45) Veröffentlichungstag und Bekanntmachung des Hinweises auf die Patenterteilung:
**12.12.2018   Patentblatt 2018/50**

(21) Anmeldenummer: **16750162.6**

(22) Anmeldetag: **09.08.2016**

(51) Int Cl.:
*C04B 26/32* *(2006.01)*     *C04B 38/00* *(2006.01)*
*C01B 33/18* *(2006.01)*

(86) Internationale Anmeldenummer:
**PCT/EP2016/068948**

(87) Internationale Veröffentlichungsnummer:
**WO 2017/036744 (09.03.2017 Gazette 2017/10)**

(54) **SILICA FORMKÖRPER MIT GERINGER THERMISCHER LEITFÄHIGKEIT**

SILICA MOLDED BODIES HAVING LOW THERMAL CONDUCTIVITY

CORPS MOULÉ EN SILICE DE FAIBLE CONDUCTIVITÉ THERMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.08.2015   DE 102015216505**

(43) Veröffentlichungstag der Anmeldung:
**04.07.2018   Patentblatt 2018/27**

(73) Patentinhaber: **Wacker Chemie AG**
**81737 München (DE)**

(72) Erfinder:
• **JANTKE, Dominik**
**85386 Eching (DE)**
• **WEIDNER, Richard**
**84489 Burghausen (DE)**
• **HINDELANG, Konrad**
**80939 München (DE)**

(74) Vertreter: **Fritz, Helmut et al**
**Wacker Chemie AG**
**Zentralbereich Patente, Marken und Lizenzen**
**Hanns-Seidel-Platz 4**
**81737 München (DE)**

(56) Entgegenhaltungen:
DE-A1- 19 943 103     DE-A1-102007 055 879
DE-A1-102010 003 204     DE-A1-102012 211 121

**Beschreibung**

Die Erfindung betrifft Silica Formkörper mit niedrigen C-Gehalt, einer geringen Dichte, einem großen Porenvolumen und einer geringen thermischen Leitfähigkeit, ein Verfahren zu deren Herstellung sowie die Verwendung der Silica Formkörper zur thermischen oder akustischen Isolierung.

Die Wärmedämmung zur Einsparung von Energie hat im Rahmen des Bewusstwerdens für nachhaltige Entwicklung und der Verteuerung der Energie sowie sich verknappenden fossilen Rohstoffen einen hohen Stellenwert erhalten. Diese Anforderungen an eine Optimierung des Wärmedämmschutzes gelten im gleichen Maße sowohl für Gebäude, also für Neubauten oder Bauten im Bestand, als auch für thermische Isolierungen im logistischen oder stationären Bereich.

Vor dem Hintergrund einer nachhaltigen Isolierung, welche eine geringe Wärmeleitung sowie geringe Brennbarkeit aufweist, sind anorganische, poröse Materialien zunehmend im Fokus.

Niedrige Wärmeleitzahlen weisen poröse Wärmedämmstoffe wie etwa Aerogele oder pyrogene oder gefällte Kieselsäuren auf.

Pyrogene Kieselsäuren werden durch Flammenhydrolyse von flüchtigen Siliciumverbindungen, wie z.B. organischen und anorganischen Chlorsilanen, in einer Wasserstoff- und Sauerstoffflamme hergestellt. Die so hergestellten Kieselsäuren weisen eine poröse Struktur auf und sind hydrophil.

Gefällte Kieselsäuren werden durch einen Fällungsprozess aus Wasserglas hergestellt. Als Wasserglas werden aus einer Schmelze erstarrte, glasartige, also amorphe, wasserlösliche Natrium-, Kalium- und Lithiumsilicate oder ihre wässrigen Lösungen bezeichnet. Durch Neutralisieren des Salzes, Hydrolyse und Kondensation entstehen aus den kettenartigen Si-O-Si-Verbindungen partikuläre $[SiO_{4/2}]$-Verbindungen.

Solch partikuläre Systeme besitzen ohne Verdichtung in der losen Schüttung bereits gute thermische Isoliereigenschaften. Eine geeignete Strukturierung, beispielsweise durch Kompaktierung, verbessert diese Isoliereigenschaften durch die gezielte Einstellung der Porenstruktur jedoch.

Nachteile solcher poröser Wärmedämmstoffe für den Bausektor auf Basis von Kieselsäuren sind beispielsweise eine hohe Feuchtigkeitsaufnahme und somit ein Nachlassen der Wärmedämmeigenschaften.

Es ist daher für Anwendungen in der Bauisolierung wünschenswert, eine möglichst hohe Hydrophobie der Dämmstoffe zu erreichen, um die Wasseraufnahme und dadurch den Verlust der thermischen Isolierungswirkung zu reduzieren.

Zudem ist es wünschenswert, Dämmstoffe mit möglichst geringer Brennbarkeit und daher einem möglichst geringen Kohlenstoffgehalt (C-Gehalt) herzustellen.

Im Bausektor führt die feinteilige Struktur der gefällten oder pyrogen hergestellten Kieselsäuren zu Schwierigkeiten bei der Verarbeitung wie etwa starke Staubbildung. Ebenso ist die Rieselfähigkeit sehr feinteiliger Substanzen beschränkt.

Beispielsweise ist in DE 29 46 476 beschrieben, eine Kompaktierung der Kieselsäuren unter Zugabe von Fasern zur Stabilisierung durchzuführen. Die so herstellbaren Formkörper weisen jedoch bei Verarbeitung Staubbildung auf und sind durch den Gehalt an Fasern nicht mehr zu zerkleinern, ohne eine Zerstörung der Struktur zu erhalten, und so für viele Anwendungen nur noch schwer direkt zu verarbeiten.

Um die Staubbildung zu vermeiden und eine vereinfachte Förderung und somit Verarbeitung der Materialien zu gewährleisten, können daher grobteilige Formkörper, wie beispielsweise Granulate, zur Verfügung gestellt werden.

DE 10 2010 003 204 A1 beschreibt die Granulierung von pyrogenen oder gefällten Kieselsäuren in einem Verfahren, durch welches Kieselsäuregranulate mit einem Hg-Porenvolumen (<4 μm) von mehr als 0,9 cm$^3$/g und einem $d_{Q3=10\%}$-Wert von mehr als 0,4 mm und einem $d_{Q3=90\%}$-Wert von weniger als 3,0 mm zur Verfügung gestellt werden. Die Kieselsäuren werden dabei aus einer wässrigen Suspension / Dispersion direkt granuliert. Die erhaltenen Granulate weisen Hydrophilie und hohe Dichten auf.

In EP 1 357 156 B1 wird die Modifizierung von oxidischen oder silikatischen Füllstoffen mit Perlfraktionen kleiner 75 μm von weniger als 15 Gew.-% und einem Medianwert der Partikelgrößenverteilung zwischen 130 und 500 μm durch Umsetzung der mikrogranulierten Füllstoffe in einem mittels Druck und / oder Temperatur verdichteten Gas mit mindestens einem Silan beschrieben. Die Modifizierung erfolgt dabei an der Oberfläche.

DE 10 2012 211 121 A1 beschreibt funktionalisierte Silica Granulate, erhalten durch Granulierung von Silica aus einer Flüssigkeit oder durch Verdichtung und Zerkleinerung und anschließender Umsetzung mit einem Oberflächenmodifizierungsmittel. Die erhaltenen Granulate weisen ein Hg-Porenvolumen für Poren kleiner 4 μm von mehr als 0,8 cm$^3$/g auf. Die erhaltenen Granulate weisen eine hohe Adsorptionskraft, beispielsweise für Enzyme, auf.

DE 197 29 505 A1 beschreibt ein Verfahren zur Herstellung von Silica Granulat durch Dispergieren einer Kieselsäure in einer Flüssigkeit, fortwährendes Rühren der Dispersion unter Bildung einer homogenen Phase, allmählichem Entzug von Feuchtigkeit aus der Dispersion unter Erzeugung einer körnigen Masse, sowie Trocknung und Sinterung der erhaltenen Granulate. Als Merkmale werden weitgehende Porenfreiheit, sowie eine Dichte von mehr als 1 g/cm$^3$ beschrieben. Es ist daher davon auszugehen, dass die Isolierwirkung der erhaltenen SiO$_2$ Granulate gering ist.

DE 199 43 103 A1 offenbart ein Verfahren zur Herstellung von Silica Formkörper, bei dem i) eine feuchte Mischung enthaltend Silica und ein organisches Lösungsmittel hergestellt wird, und ii) das Lösungsmittel aus der feuchten Mischung verdampft wird, wobei die Formgebung der Silica Formkörper stattfindet; bei dem hydrophile Kieselsäure oder ein Gemisch aus hydrophiler Kieselsäure und teilhydrophober Kieselsäure eingesetzt wird; bei dem das Lösungsmittel ausgewählt wird aus Alkanen, Ethern und Alkoholen und deren Gemischen. Die damit hergestellten Formkörper weisen Dichten zwischen 1,4 und 1,8 $g/cm^3$ auf.

DE 10 2007 055879 A1 offenbart ein Verfahren zur Herstellung von Silica Formkörper, bei dem i) eine feuchte, pulvrige Mischung enthaltend Kieselsäure und maximal 50 Gew.% bezogen auf die Kieselsäure an organisches Lösungsmittel hergestellt wird, und ii) die Formgebung der pulvrigen Kieselsäure durch mechanische Verdichtung z.B. in Presswalzen stattfindet.

Gegenstand der Erfindung sind Silica Formkörper mit einem C-Gehalt von unter 8 Gew.-%,

einer Dichte, bestimmt durch Hg-Porosimetrie, von unter 0,30 $g/cm^3$,

einem Porenvolumen für Poren kleiner 4 $\mu m$ bestimmt durch Hg-Porosimetrie von mehr als 2,0 $cm^3/g$, einem Anteil der Poren kleiner 4 $\mu m$ am Gesamtporenvolumen von wenigstens 60 % und einer thermischen Leitfähigkeit, bestimmt über eine instationäre Methode von unter 30 mW/K*m.

Gegenstand der Erfindung ist auch ein Verfahren zur Herstellung der Silica Formkörper, gemäß Anspruch 1.

Es wurde gefunden, dass die so hergestellten Formkörper geringe Dichten aufweisen und sehr gute thermische Isolatoren darstellen. Abhängig vom eingesetzten Binder sind die erhaltenen Produkte durchgehend hydrophob, obwohl sie einen geringen C-Gehalt aufweisen. Die Formkörper sind durch ihre mechanische Stabilität überraschenderweise gut handhabbar. Abhängig von angewendeten Verfahren können die erhaltenen Produkte verschiedene Formen, wie beispielsweise Granulate, annehmen. Die Form der Silica Formkörper kann so beliebig je nach Verfahren und Bedarf eingestellt werden.

Der C-Gehalt der Silica Formkörper liegt bevorzugt unter 6 Gew.-% und besonders bevorzugt unter 4 Gew.-%. Der C-Gehalt der Silica Formkörper liegt bevorzugt bei mindestens 1 Gew.-% und besonders bevorzugt bei mindestens 1,5 Gew.-%. In einer weiteren Ausführungsform, in der Granulate ohne durchgehende Hydrophobie erhalten werden, liegt der C-Gehalt bevorzugt unter 3 Gew.-% und besonders bevorzugt unter 2 Gew.-%.

Die Silica Formkörper weisen bevorzugt eine Dichte, bestimmt durch Pyknometrie oder Hg-Porosimetrie, von bevorzugt unter 0,25 $g/cm^3$ und besonders bevorzugt von unter 0,20 $g/cm^3$ auf. Die Silica Formkörper weisen bevorzugt ein Porenvolumen für Poren kleiner 4 $\mu m$ bestimmt durch Hg-Porosimetrie von mehr als 2,5 $cm^3/g$, besonders bevorzugt von mehr als 2,9 $cm^3/g$ auf und insbesondere bevorzugt von mehr als 3,3 $cm^3/g$ auf.

Der Anteil der Poren kleiner 4 $\mu m$, bestimmt durch Hg-Porosimetrie, am gesamten theoretischen Porenvolumen, berechnet aus der Dichte der erhaltenen Formkörper, liegt bevorzugt bei über 70 %, besonders bevorzugt bei über 80 % und insbesondere bevorzugt bei über 90%.

Die thermische Leitfähigkeit, bestimmt über stationäre oder instationäre Methoden, der Silica Formkörper liegt bei 25°C bevorzugt unter 26 mW/K*m und besonders bevorzugt unter 22 mW/K*m.

In einer bevorzugten Ausführungsform weisen die Silica Formkörper neben den eben dargestellten Eigenschaften permanente Hydrophobie auf.

Beispiele für Formen, die die Silica Formkörper einnehmen können sind Granulate, Platten, definierte Formkörper, wie beispielsweise Ringe oder Pellets, und Bruchstücke mit einer statistischen Größenverteilung. Die Größenverteilung kann nach dem jeweiligen Formgebungsschritt ii) über das angewendete Zerkleinerungsverfahren eingestellt werden.

In den erfindungsgemäßen Verfahren können alle dem Fachmann bekannten Kieselsäuren eingesetzt werden. Bevorzugt werden pyrogene Kieselsäuren oder Fällungskieselsäuren oder Gemische davon eingesetzt. Dabei werden weiterhin bevorzugt Kieselsäuren mit einer Oberfläche zwischen 50 und 800 $m^2/g$, besonders bevorzugt wischen 100 und 500 und insbesondere bevorzugt Kieselsäuren mit einer Oberfläche zwischen 150 und 400 $m^2/g$ eingesetzt. Die eingesetzten Kieselsäuren sind entweder hydrophil, teilhydrophob oder hydrophob.

Hydrophil bedeutet im Rahmen dieser Erfindung, dass die Si-OH Gruppen an der Oberfläche zugänglich sind und die Kieselsäuren durch Wasser benetzbar sind.

Teilhydrophob oder hydrophob bedeutet im Rahmen dieser Erfindung, dass die Si-OH Gruppen an der Oberfläche teilweise mit organischen Gruppen umgesetzt wurden, so dass sich der Anteil an zugänglichen Si-OH Gruppen reduziert, wie sie beispielsweise in EP1433749 oder EP686676 beschrieben sind.

Vorzugsweise wird hydrophile Kieselsäure eingesetzt oder ein Gemisch aus hydrophiler Kieselsäure und teilhydrophober Kieselsäure.

Die in den erfindungsgemäßen Verfahren eingesetzten Kieselsäuren weisen eine aggregierte Struktur aus Primärpartikeln auf, welche im Verlauf des Verfahrens zu den porösen Silica Formkörpern strukturiert werden.

Nach Strukturierung zu Silica Formkörpern erfolgt die Fixierung der Struktur entweder durch chemische oder physikalische Bindung.

Als Binder zur Verknüpfung der einzelnen Kieselsäureaggregate auf chemischen Weg kommen alle dem Fachmann bekannten Bindersysteme, die bi- oder höher funktionell sind, zum Einsatz. Voraussetzung ist die Möglichkeit, mit den funktionellen Gruppen, bevorzugt den OH-Gruppen, auf der Kieselsäureoberfläche zu reagieren, das heißt eine Bindung einzugehen.

Als Bindersysteme werden bevorzugt eingesetzt Organosilane der allgemeinen Formel (I)

$$Z_{1+x}\text{-}SiR_{2-x}\text{-}(CH_2)_v\text{-}Y \qquad (I),$$

in der

**Z** Halogen, Stickstoffrest, $OR^1$ oder $OCOR^1$, oder OH und

**$R^1$** C-O gebundener $C_1$-$C_{15}$-Kohlenwasserstoff-Rest, bevorzugt $C_1$-$C_8$-Kohlenwasserstoff-Rest, besonders bevorzugt $C_1$-$C_3$-Kohlenwasserstoff-Rest bedeuten.

**R** bedeutet Wasserstoff, ein organischer, linearer, verzweigter, cyclischer, gesättigter oder ungesättigter, aromatischer oder heteroaromatischer Rest, mit oder ohne Substituenten. Das bedeutet, dass die Reste **R** substituiert oder unsubstituiert, sein können. Bevorzugte Substituenten sind -CN, -NCO, -NR'$_2$, -COOH, -COOR', -Halogen,-(Meth)acryl, -Epoxy, -SH, -OH, -CONR'$_2$, -O-R', -CO-R', -COO-R', -OCO-R', oder -OCOO-R', -S-R', -NR'-, -N=R', -N=N-R', oder -P=R'. Besonders bevorzugte Reste **R** sind gesättigte oder ungesättigte Reste mit 1 bis 4 Kohlenstoffatomen, besonders bevorzugt $C_1$-$C_4$-Alkyl, Vinyl, 3-Aminopropyl, -CH$_2$-CH$_2$-CH$_2$-NH-CH$_2$-CH$_2$-NH$_2$, insbesondere Methyl oder Ethyl. Im speziellen bevorzugt ist **R** eine Methyl-Gruppe.

**R'** bedeutet $C_1$-$C_6$-Kohlenwasserstoffrest, vorzugsweise $C_1$-$C_4$-Alkyl, Vinyl, insbesondere Methyl oder Ethyl.

**Y** bedeutet Wasserstoff, gesättigter oder einfach oder mehrfach ungesättigter $C_1$-$C_{20}$-Kohlenwasserstoff-Rest,-OC(O)C(R')=CH$_2$, -Vinyl, -Hydroxyl, -Halogen, Phosphonato,-NCO, -NH-C(O)-OR', -Glycidoxy, -SH, Säureanhydride, wie Bernsteinsäureanhydrid.

**v** bedeutet ganzzahlige Werte von 0 bis 10, bevorzugt 0 - 5 und besonders bevorzugt 0, 1, oder 3, und

**x** die Werte 1 oder 2.

Bevorzugt werden Alkoxy- oder Acetoxyfunktionelle monomere oder oligomere Silane oder deren Gemische eingesetzt. Besonders bevorzugt werden Silane mit der organischen Gruppe $C_1$-$C_3$ Alkyl, gesättigt oder ungesättigt, eingesetzt und als Alkoxygruppe Methoxy- oder Ethoxygruppen.

Als Bindersysteme werden auch bevorzugt eingesetzt Organosiloxane, aufgebaut aus A Einheiten der allgemeinen Formel (IIa) und B Einheiten der Formeln (IIb - d)

$$(R_3SiO_{1/2}) \qquad (IIa),$$

$$(R_2SiO_{2/2}) \qquad (IIb),$$

$$(RSiO_{3/2}) \qquad (IIc),$$

$$(SiO_{4/2}) \qquad (IId),$$

wobei die Organosiloxane an Si-Atomen 1 oder 2 Gruppen -Z enthalten können, wobei Z die oben genannte Bedeutung hat, und die Organosiloxane die Gruppen =SiZ oder =SiZ$_2$ in einer Anzahl C aufweisen können und für A, B und C gilt: $1 \leq B \leq 5000$, bevorzugt $3 \leq B \leq 1000$, besonders bevorzugt $5 \leq B \leq 100$ und in einer speziellen Ausführung $5 \leq B \leq 50$ ist, mit der Maßgabe, dass $B \geq A+C$, bevorzugt $B > A+C$ und besonders bevorzugt $B > 2 \times (A+C)$ ist, wobei für A+B=0 gilt $10 \leq B \leq 100$, vorzugsweise $A + C \leq 20$ und besonders bevorzugt $A + C \leq 2$, wobei das Verhältnis A zu C beliebig sein kann, und R die oben angegebene Bedeutung hat.

Bevorzugt werden Organosiloxane der allgemeinen Formel II eingesetzt.

Beispiele für Organosiloxane sind lineare oder cyclische Dialkylsiloxane mit einer mittleren Anzahl an Dialkylsiloxyeinheiten von größer 2, bevorzugt größer 10 und bevorzugt kleiner 100, besonders bevorzugt kleiner 50.
Die Dialkylsiloxane sind vorzugsweise Dimethylsiloxane, besonders bevorzugt Polydimethylsiloxane.
Beispiele für lineare Polydimethylsiloxane sind solche mit den Endgruppen: Trimethylsiloxy, Dimethylhydroxysiloxy, Dimethylchlorsiloxy, Methyldichlorsiloxy, Dimethylmethoxysiloxy, Methyldimethoxysiloxy, Dimethylethoxysiloxy, Methyldiethoxysiloxy, Dimethylacetoxysiloxy, Methyldiacetoxysiloxy; besonders bevorzugt sind Trimethylsiloxy und Dimethylhydroxysiloxy.

Die Endgruppen können gleich oder unterschiedlich sein.

Für die physikalische Bindung der einzelnen Kieselsäureaggregate kommen alle dem Fachmann bekannten Siliconprodukte, insbesondere Siliconharze, zum Einsatz. Beispiele dafür sind Siliconharze, aufgebaut aus mindestens 5 Einheiten der allgemeinen Formel (IIa - d), bei denen weitgehend keine Gruppen **Z** vorhanden sind. Es können aber beispielsweise auch Mischungen aus chemischen und physikalischen Bindern eingesetzt werden.

In einer weiteren bevorzugten Ausführungsform werden als Bindersysteme Chlorsilane des Typs $R_xSiCl_{4-x}$ eingesetzt, wobei **x** = 0, 1 oder 2 oder deren Gemische und **R** gleich oder verschieden sein kann und die oben genannten Bedeutungen aufweist.

In einer weiteren bevorzugten Ausführungsform, bei der keine Hydrophobie der erhaltenen Silica Formkörper erreicht wird, werden tetrafunktionelle Organosilane des Typs $Si-Z_4$ oder deren Hydrolysate, wobei Z die oben genannte Bedeutung aufweist.

Um permanente Hydrophobie der Silica Formkörper zu erreichen, werden bevorzugt bi- oder trifunktionelle Systeme eingesetzt, das heißt, dass neben den reaktiven Gruppen in dem Molekül direkte, an das Silicium gebundene organische Gruppen vorhanden sind, welche zu einer Hydrophobierung führen.

Die Menge des Binders wird so gewählt, dass sowohl eine Belegung der Oberfläche, also bevorzugt die Hydrophobierung, als auch die Bindung der einzelnen Silica Agglomerate erfolgen kann. Dabei hängt die Menge des eingesetzten Binders von der Oberfläche der Silica ab. Bei geringeren Oberflächen kann es vorteilhaft sein, eine reduzierte Menge an Binder einzusetzen. Unabhängig davon werden bevorzugt 1 bis 30 Gew.-% des Binders, bezogen auf die Masse an Silica, besonders bevorzugt 5 bis 25 Gew.-% und insbesondere bevorzugt werden 8 bis 20 Gew.-% des Bindersystems eingesetzt.

Als Lösungsmittel für das Verfahren 1 können alle organischen Lösungsmittel zum Einsatz kommen, welche eine homogene Verteilung der Silica und der Bindersysteme gewährleisten können. Die Natur des Lösungsmittels bestimmt dabei das Kontraktionsverhalten während der Entfernung des Lösungsmittels, und daher auch die finalen Eigenschaften der Produkte, wie beispielsweise die Dichte. Die Lösungsmittel sollen nicht mit den Bindersystemen oder den Kieselsäuren reagieren und so die Reaktion stören. Die Lösungsmittel sollen in der Lage sein, die Binder zu lösen und somit homogen auf den Kieselsäuren zu verteilen. Bevorzugt sind Lösungsmittel mit einem Siedepunkt bei 0,10 MPa (abs.) von höchstens 120°C, insbesondere höchstens 90°C. Bevorzugt werden Lösungsmittel mit einer niedrigeren Oberflächenspannung als Wasser eingesetzt, besonders bevorzugt kommen Alkane, Ether oder Alkohole zum Einsatz, insbesondere bevorzugt sind Pentan, n-Hexan, iso-Hexan, Heptan, Diethylether, Methyl-tert-Butylther, Methanol oder Ethanol. Es können auch Gemische der genannten Lösungsmittel eingesetzt werden.

Die Menge des eingesetzten Lösungsmittels wird so gewählt, dass sich aus der erhaltenen Mischung eine rührfähige Masse ergibt. Diese kann dabei dünnflüssig bis hochviskos eingestellt werden. Vorzugsweise ist die feuchte Mischung eine Dispersion.

Die Menge an Lösungsmittel liegt bevorzugt unter 30 Liter pro kg Silica, bevorzugt unter 23 Liter pro kg Silica, besonders bevorzugt unter 18 Liter pro kg Silica und insbesondere bevorzugt unter 10 Liter pro kg Silica.

Eine Aktivierung der Bindersysteme, wenn benötigt, kann durch alle dem Fachmann bekannten Katalysatoren, z.B. durch Lewis- oder Brönsted-Säuren, wie beispielsweise Titanalkoxide oder Zinnalkoxide, zur Hydrolyse von Alkoxysilanen durchgeführt werden. Bevorzugt wird die Hydrolyse durch Zugabe von wässrigen Säuren zu der Dispersion katalysiert. Besonders bevorzugt wird wässrige Salzsäure zugegeben. Ebenso kann die Aktivierung der Bindersysteme durch die Erhöhung der Temperatur oder der Kombination eines Katalysators mit erhöhter Temperatur durchgeführt werden. Denkbar ist auch eine Durchführung unter Überdruck, um z.B. die Temperatur über den Siedepunkt bei Normaldruck hinaus zu erhöhen. Bevorzugt wird ein möglichst geringer Anteil an Katalysator eingesetzt.

Als weitere Komponenten können der Dispersion Verbindungen zugesetzt, die Wärmestrahlen im Infrarotbereich absorbieren, streuen oder reflektieren können. Sie werden im Allgemeinen als IR-Trüber bezeichnet. Vorzugsweise weisen diese Trüber im IR-Spektralbereich ein Maximum zwischen vorzugsweise 1,5 und 10 $\mu$m auf. Die Partikelgröße der Teilchen liegt vorzugsweise zwischen 0,5 - 15 $\mu$m. Beispiele für derartige Substanzen sind vorzugsweise Titanoxide, Zirkonoxide, Ilmenite, Eisentitanate, Eisenoxide, Zirkonsilikate, Siliciumcarbid, Manganoxide und Ruß.

Weiterhin können der Dispersion zu einer Reduzierung der elektrostatischen Aufladung, falls benötigt, alle dem Fachmann bekannten Additive zur Reduzierung der elektrostatischen Aufladung wie etwa leitende Alkylammoniumsalze zugesetzt werden.

Aus technischen und / oder wirtschaftlichen Gründen können den Dispersionen weitere Füllstoffe zugesetzt werden. Zum Einsatz kommen hier vorzugsweise synthetisch hergestellte Modifikationen von Siliciumdioxid, wie z. B. Aerogele, gefällte Kieselsäuren, Lichtbogenkieselsäuren, $SiO_2$-haltige Flugstäube, die durch Oxidation von flüchtigem Siliciummonooxid bei der elektrochemischen Herstellung von Silicium oder Ferrosilicium entstehen. Ebenso Kieselsäuren, die durch Auslaugen von Silikaten wie Calciumsilikat, Magnesiumsilikat und Mischsilikaten wie beispielsweise Olivin mit Säuren hergestellt werden. Ferner kommen zum Einsatz natürliche vorkommende $SiO_2$-haltige Verbindungen wie

Diatomeenerden und Kieselguren.

In dem erfindungsgemäße Verfahren werden die Silica Formkörper in einem Prozess hergestellt, in welchem eine Mischung aus den einzelnen Komponenten in einem organischen Lösungsmittel hergestellt wird und anschließend durch Entfernen des Lösungsmittels die Formgebung durchgeführt wird. Ja nach gewähltem Verhältnis von Kieselsäure zu organischem Lösemittel kann eine dünnflüssige Dispersion oder eine breiartige Masse erhalten werden.

In einer bevorzugten Ausführungsform werden die Komponenten in einem oder mehreren organischen Lösungsmittels gemischt. Bevorzugt wird nur ein organisches Lösungsmittel eingesetzt. Die Herstellung der Mischung kann dabei mit allen dem Fachmann bekannten Methoden erfolgen, wie beispielsweise durch Schütteln, wie z.B. mit einem Taumelmischer, oder durch Rühren, wie beispielsweise durch Balkenrührer, Dissolver, Rotor-Stator-Systeme oder Induktoren mit Zwangsbenetzung im Scherspalt. Ebenfalls möglich ist die Herstellung der Mischung durch Besprühen der Kieselsäure mit dem Bindersystem und dem organischen Lösungsmittel, sowohl sequentiell als auch gleichzeitig, sowie den weiteren Komponenten, beispielsweise in einem Fließbett oder einer Wirbelschicht.

Anschließend wird die Reaktionsmischung vorzugsweise zur Aktivierung der eingesetzten Binder vor der Entfernung des Lösungsmittels erhitzt. Die Temperaturen befinden sich dabei bevorzugt zwischen 20°C und dem Siedepunkt des eingesetzten organischen Lösungsmittels, besonders bevorzugt zwischen 20 und 80, insbesondere zwischen 20 und 60°C. Denkbar ist auch eine Aktivierung unter Überdruck, um z.B. die Temperatur über den Siedepunkt bei Normaldruck hinaus zu erhöhen. Die Dauer der Aktivierung beträgt bevorzugt weniger als 180 Minuten, bevorzugt weniger als 120 Minuten und besonders bevorzugt weniger als 60 Minuten. Eine Überprüfung ob die Dauer der Aktivierung ausreichend gewählt ist, kann beispielsweise durch NMR-Spektroskopie erfolgen. Hier kann die Hydrolyse der reaktiven Gruppen verfolgt werden.

Das Verdampfen des Lösungsmittel dient zur Kontraktion der Dispersion und wird anschließend unter ständiger Bewegung, wie etwa in einem Taumelmischer, in einem Rundkolben, bei reduzierten Drücken und / oder erhöhten Temperaturen durchgeführt, wobei sich ohne weitere Verfahrensmaßnahme eine körnige Masse (Granulate) bildet. Die eingesetzte Temperatur befindet sich dabei in den oben genannten Bereichen. Der eingestellte Druck befindet sich unter bevorzugt 2 bar, besonders bevorzugt unter 1 bar, insbesondere unter 800 mbar.

Die erhaltenen Formkörper werden anschließend zur weiteren Aushärtung und zur Entfernung der Lösungsmittelreste bis zur Gewichtskonstanz getrocknet. Zur Formgebung können diese Granulate in Formen gegeben werden. Bevorzugt wird bei Temperaturen zwischen 80 und 150°C, besonders bevorzugt bei 120°C bis zur Gewichtskonstanz getrocknet. Um diese Trocknung zu beschleunigen, kann ein Unterdruck angewandt werden. Dabei wird ein Druck bevorzugt unter 800 mbar, besonders bevorzugt unter 500 mbar und insbesondere bevorzugt von unter 200 mbar eingestellt. Die Trocknung kann dabei durch Strahlungs-, Konvektions- und/oder Kontakttrocknung nach allen dem Fachmann bekannten Verfahren erfolgen.

Das während der Granulierung und Trocknung abgetrennte Lösungsmittel kann in dem Verfahren 1 vorzugsweise nach Abtrennung etwaiger Verunreinigungen beziehungsweise abgespaltener reaktiver Gruppen wie etwa Alkoholen aus Alkoxyfunktionellen Bindern zurückgeführt werden.

Die Trennung in verschiedene Korngrößen kann entweder vor, während oder nach der abschließenden Trocknung der körnigen Masse durchgeführt werden. Zum Einsatz können dabei alle dem Fachmann bekannten Methoden zur Siebung oder Sichtung von Schüttgütern kommen. Bevorzugt erfolgt die Trennung der verschiedenen Korngrößenfraktionen durch Siebung.

Der erhaltene Grobanteil kann weiterhin durch alle gängigen Methoden wie etwa Klassieren, Mahlen, Brechen zerkleinert werden. Bevorzugt wird der Grobanteil während dem Siebvorgang durch das Sieb der größten Maschenweite zur Zerkleinerung gedrückt.

Die Klassierung kann auch während der Trocknung erfolgen (z.B. klassierende Wirbelschicht).

Der Feinanteil kann dem Verfahren 1 zur Herstellung der Granulate erneut zugeführt werden.

Die Formgebung kann durch Selbststrukturierung bei der Trocknung, wie z.B. durch Schütteln oder durch andere dem Fachmann bekannten Granulierverfahren erfolgen. Die feuchte Masse kann aber auch einer gezielten Formgebung Unterzogen werden. Hierfür können alle dem Fachmann bekannten Verfahren zur Formgebung viskoser Massen eingesetzt werden, wie beispielsweise Extrusion oder Spritzguss.

Die so erhaltenen Formkörper können nun nach Bedarf zerkleinert werden. Dies kann nach allen dem Fachmann bekannten Methoden durchgeführt werden, wie beispielsweise durch Brechen, Klassieren oder Mahlen. Anschließend erfolgt eine Trennung der erhaltenen Bruchstücke in verschiedene Kornfraktionen.

Zum Einsatz können dabei alle dem Fachmann bekannten Methoden zur Siebung oder Sichtung von Schüttgütern kommen. Bevorzugt erfolgt die Trennung der verschiedenen Korngrößenfraktionen durch Siebung.

Bei Bedarf können über die offenbarten Verfahren auch definierte Formkörper wie Platten, Kugeln, Zylinder, Hohlzylinder (z.B. für Rohrleitungen), aber auch komplexere Formen wie Isolierungen für Elektrogeräte (z.B. Kühlschränke, Kochfelder) und Isolierungen im Automobilbereich hergestellt werden.

Je nach Herstellungsverfahren und gewünschter Anwendung können über die offenbarten Verfahren verschiedene Partikelgrößen bzw. Partikelgrößenverteilungen hergestellt werden.

Die Silica Formkörper finden bevorzugt Verwendung in der dem Fachmann bekannten Anwendungsform zur thermischen oder akustischen Isolierung. Beispielsweise finden die Silica Formkörper Anwendung als Komponenten in anorganischen Putzsystemen, ggf. in Kombination mit weiteren organischen oder anorganischen Bindersystemen, nach weiterer Verarbeitung in Form von Platten, welche direkt als Dämmstoff eingesetzt werden können, oder beispielsweise als Einblasdämmstoff zur Füllung von Hohlräumen in Mauerwerken, oder zur Füllung von Hohlbausteinen.

Alle vorstehenden Symbole der vorstehenden Formeln weisen ihre Bedeutungen jeweils unabhängig voneinander auf. In allen Formeln ist das Siliciumatom vierwertig. Die Summe aller Bestandteile der Mischung ergeben 100 Gew.-%. Die Ausdrücke Silica und Kieselsäuren sind gleichbedeutend verwendet.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

## Bestimmung der Dichte

Die Dichte der hydrophoben Silica Formkörper wurde mittels Pyknometrie bestimmt. Hierzu wurden einzelne Granulate mit einer Größe von mehr als 5 mm auf einer Analysenwaage gewogen ($m_1$) und zur Volumenbestimmung die Wasserverdrängung in einem 25 ml Pyknometer (Glaspyknometer nach Gay-Lussac nach DIN ISO 3507 der Firma Blaubrand) bei Raumtemperatur gemessen. Hierfür wurden folgende Massen auf einer Analysenwaage bestimmt:

$m_2$: Masse des Pyknometers gefüllt mit destilliertem Wasser

$m_3$: Masse des Pyknometers gefüllt mit dem Silica Granulat und destilliertem Wasser

Das Volumen des Granulats (V1) entspricht dem Volumen des verdrängten Wassers (V2). Das Volumen und die Dichte des Granulats wurden nach folgenden Formeln berechnet:

$$V_1 \ = \ V_2 \ = \ \rho_w \ * \ (m_2 \ - \ (m_3 \ - \ m_1))$$

$$\rho_{Silica\ Granulat} \ = \ m_1 \ / \ V_1$$

wobei pw die Dichte von Wasser bei Raumtemperatur (0,998 g/cm$^3$) angibt.

Bei dem Befüllen des Pyknometers mit dem Granulat und dem Wasser wurde darauf geachtet, dass keine Luftblasen eingeschlossen werden. Aufgrund der hohen Hydrophobie der Granulate ist ein Eindringen von Wasser in die Poren der Proben ausgeschlossen. Zur Kontrolle wurde das Gewicht der Granulate nach der Messung durch erneutes Wiegen bestätigt.

## Bestimmung der Ausbeute

Zur Bestimmung der Ausbeute wurden die Produkte bis zur Gewichtskonstanz getrocknet und anschließend bei Raumtemperatur gewogen.

## Bestimmung der thermischen Leitfähigkeit

Die thermische Leitfähigkeit der Granulate wurde an Granulaten mit glatten Flächen der Dimensionen von mindestens 4 x 4 mm an einem THB Transient Hot Bridge Analyzer (THB-100) der Firma Linseis unter Verwendung eines THB Hot Point Sensors (3 x 3 mm Kapton) bei Raumtemperatur bestimmt (Messzeit 30 Sekunden, Stromstärke: 5 mA, Heizleistung: 5 mW). Die Kalibrierung des Sensors erfolgte an einer Referenz mit der thermischen Leitfähigkeit von 16,2 mW K * m.

Bei der Herstellung von plattenförmigen Körpern durch einen Pressvorgang wird die thermische Leitfähigkeit in Anlehnung an DIN EN 12667:2001 an einem Gerät der Bezeichnung A206 der Firma Hesto an Platten der Dimensionen 11 x 11 x 2 cm bestimmt.

## Bestimmung des Kohlenstoffgehalts

Die Bestimmung des Kohlenstoffgehalts (C-Gehalts) der Proben wurde an einem Leco CS 230 Analysator durchgeführt. Die Analyse erfolgte durch Hochfrequenzverbrennung der Probe im Sauerstoffstrom. Detektiert wurde mittels nicht dispersiver Infrarotdetektoren.

Qualitativer Test auf Hydrophobie

Um die Hydrophobie der Granulate zu verifizieren, wird 1 g des hydrophoben Silica Granulats zu 10 ml Wasser gegeben und in einem geschlossenen Gefäß für 48 h bei 60°C gelagert. Wenn die Granulate nach dieser Zeit nicht durch das Wasser benetzt werden und oben aufschwimmen, sind diese dauerhaft hydrophob. Eine Bestätigung erfolgt durch Auswaage der Granulate vor und nach der Behandlung: keine Wasseraufnahme bedeutet Granulate sind hydrophob.

Bestimmung des Quecksilber-Porenvolumens < 4 $\mu$m

Die Methode basiert auf der Quecksilber-Intrusion gemäß DIN 66133, wobei ein Pascal 140/440 der Firma Porotec verwendet wird.

Das Verfahrensprinzip beruht auf der Messung des in einen porösen Feststoff eingepressten Quecksilbervolumens in Abhängigkeit von dem angewendeten Druck. Dabei werden nur die Poren erfasst, in die bei dem angewendeten Druck (max. 400 MPa) Quecksilber eindringen kann (Verfahren von Ritter und Drake). Eine nichtbenetzende Flüssigkeit dringt nur unter Druck in ein poröses System ein. Der aufzuwendende Druck ist umgekehrt proportional zur lichten Weite der Porenöffnungen. Für zylindrische Poren ist der Zusammenhang zwischen Porenradius $r_p$ und Druck p durch die Washburn-Gleichung gegeben:

$$r_p = -\frac{2 \times \sigma}{p} \times \cos\theta$$

$r_p$: Porenradius
p: Druck
$\sigma$: Oberflächenspannung (480 mN/m*)
$\theta$: Kontaktwinkel des Quecksilbers (140°*)
*gemäß DIN 66133

Das Quecksilber-Porenvolumen < 4 $\mu$m ergibt sich aus dem kumulierten Porenvolumen aller Poren mit einem Durchmesser von < 4 $\mu$m bis zur Bestimmungsgrenze des Quecksilber-Porosimeters Pascal 140/440 (Maximaldruck 400 MPa).

Berechnung des Anteils der Poren <4$\mu$m an der Gesamtporosität

Der Anteil der Poren < 4 $\mu$m wird nach folgender Gleichung berechnet:

$$Anteil\ Poren < 4\mu m = \frac{Porenvolumen < 4\mu m}{Gesamtporenvolumen} * 100\%$$

Das Gesamtporenvolumen berechnet sich nach folgender Gleichung:

$$Gesamtporenvolumen = \frac{1g}{Dichte\ Formkörper\ (Hg-Poro)} - \frac{1g}{Skelettdichte\ (SiO_2)}$$

Als Skelettdichte wird die Dichte von amorphem $SiO_2$ verwendet. Diese ist 2,2 g/cm$^3$.

Beurteilung der mechanischen Stabilität

Zur qualitativen Beurteilung der mechanischen Stabilität der erhaltenen Formkörper aus Verfahren 1 werden die Formkörper durch mehrmaliges Umschütten und Schütteln mechanisch beansprucht. Zur Bestimmung der mechanischen Stabilität der Formkörper aus Verfahren 2 werden die erhaltenen plattenförmigen Körper zerkleinert und demselben Test wie die Produkte aus Verfahren 1 unterzogen. Folgende Beurteilungen werden dabei verwendet:

++ sehr stabil, kein Abrieb oder Zerbrechen
+ stabil, wenig Abrieb

o mäßig stabil, Abrieb und Bruch zu beobachten

- wenig stabil, Abrieb und Bruch durch geringe Beanspruchung zu beobachten

-- nicht stabil, Bruch der Formkörper auch ohne mechanische Beanspruchung zu beobachten

**Bezugsquellen:**

**HDK® T30:** hydrophile, pyrogene Kieselsäure der Wacker Chemie AG mit einer BET Oberfläche von 300 m$^2$ / g.
**HDK® N20:** hydrophile, pyrogene Kieselsäure der Wacker Chemie AG mit einer BET Oberfläche von 200 m$^2$ / g.
**Methyltrimethoxysilan:** (WACKER® SILAN M1-TRIMETHOXY der Wacker Chemie AG) (Wacker).
**Dimethyldimethoxysilan:** (WACKER® SILAN M2-DIMETHOXY der Wacker Chemie AG).
**Methyltriethoxysilan:** (WACKER® SILAN M1-TRIETHOXY der Wacker Chemie AG).
**Dimethyldiethoxysilan** (WACKER® SILAN M2-DIETHOXY der Wacker Chemie AG).
**Tetraethoxysilan** (WACKER TES28 der Wacker Chemie AG).

Alle weiteren Laborchemikalien wurden von gängigen Zulieferern bezogen.

**Beispiele**

Beispiel 1

In einem Rundkolben werden 10 g HDK T30 mit 2 g MTMS und 0,15 g HCl (1 M) in 250 ml Pentan suspendiert und für 60 Minuten am Rückfluss auf 60 °C erhitzt. Anschließend wird die trübe Reaktionsmischung am Rotationsverdampfer bei 40°C und 800 mbar eingeengt bis sich im Trocknungsverlauf die Granulierung der zähen Reaktionsmasse einstellt. Anschließend werden die Granulate in eine Kristallisierschale überführt und bis zur Gewichtskonstanz in einem Vakuumtrockenschrank bei 120°C und 50 mbar getrocknet. Die erhaltenen Granulate sind hydrophob.

Beispiel 2

Durchführung wie Beispiel 1 mit folgenden Einsatzmengen: 10 g HDK T30, 2 g DMDMS, 0,15 g HCl (1 M), 250 ml Pentan. Die erhaltenen Granulate sind hydrophob.

Beispiel 3

Durchführung wie Beispiel 1 mit folgenden Einsatzmengen: 10 g HDK T30, 1 g MTMS, 1 g DMDMS, 0,15 g HCl (1 M), 250 ml Pentan. Die erhaltenen Granulate sind hydrophob.

Beispiel 4

Durchführung wie Beispiel 1 mit folgenden Einsatzmengen: 10 g HDK H30, 1 g MTMS, 1 g DMDMS, 0,15 g HCl (1 M), 250 ml Pentan. Die erhaltenen Granulate sind hydrophob.

Beispiel 5

Durchführung wie Beispiel 1 mit folgenden Einsatzmengen: 5 g HDK T30, 5 g HDK H30, 1 g MTMS, 1 g DMDMS, 0,15 g HCl (1 M), 250 ml Pentan. Die erhaltenen Granulate sind hydrophob.

Beispiel 6

Durchführung wie Beispiel 1 mit folgenden Einsatzmengen: 10 g HDK T30, 1 g MTMS, 1 g DMDMS, 0,15 g HCl (1 M), 250 ml Hexan. Die erhaltenen Granulate sind hydrophob.

Beispiel 7

Durchführung wie Beispiel 1 mit folgenden Einsatzmengen: 10 g HDK T30, 1 g MTMS, 1 g DMDMS, 0,15 g HCl (1 M), 250 ml Heptan. Die erhaltenen Granulate sind hydrophob.

### Beispiel 8

Durchführung wie Beispiel 1 mit folgenden Einsatzmengen: 10 g HDK T30, 1 g MTMS, 1 g DMDMS, 0,15 g HCl (1 M), 250 ml Diethylether. Die erhaltenen Granulate sind hydrophob.

### Beispiel 9

Durchführung wie Beispiel 1 mit folgenden Einsatzmengen: 10 g HDK T30, 1 g MTMS, 1 g DMDMS, 0,15 g HCl (1 M), 250 ml Methanol. Die erhaltenen Granulate sind hydrophob.

### Beispiel 10

Durchführung wie Beispiel 1 mit folgenden Einsatzmengen: 10 g HDK T30, 1 g MTMS, 1 g DMDMS, 0,15 g HCl (1 M), 250 ml Pentan, 0,2 g Cetyltrimethylammoniumbromid. Die erhaltenen Granulate sind hydrophob und zeigen eine geringere elektrostatische Aufladung.

### Beispiel 11

Durchführung wie Beispiel 1 mit folgenden Einsatzmengen: 10 g HDK T30, 0,5 g MTMS, 0,5 g DMDMS, 0,15 g HCl (1 M), 250 ml Pentan. Die erhaltenen Granulate sind nicht hydrophob.

### Beispiel 12

Durchführung wie Beispiel 1 mit folgenden Einsatzmengen: 10 g HDK T30, 1,5 g MTMS, 1,5 g DMDMS, 0,15 g HCl (1 M), 250 ml Pentan. Die erhaltenen Granulate sind hydrophob.

### Beispiel 13

Durchführung wie Beispiel 1 mit folgenden Einsatzmengen: 10 g HDK T30, 2 g MTMS, 2 g DMDMS, 0,15 g HCl (1 M), 250 ml Pentan. Die erhaltenen Granulate sind hydrophob.

### Beispiel 14

Durchführung wie Beispiel 1 mit folgenden Einsatzmengen: 10 g HDK N20, 1 g MTMS, 1 g DMDMS, 0,15 g HCl (1 M), 250 ml Pentan. Die erhaltenen Granulate sind hydrophob.

### Beispiel 15

Durchführung wie Beispiel 1 mit folgenden Einsatzmengen: 10 g HDK T30, 2 g DMDES, 0,15 g HCl (1 M), 250 ml Pentan. Die erhaltenen Granulate sind hydrophob.

### Beispiel 16

Durchführung wie Beispiel 1 mit folgenden Einsatzmengen: 10 g HDK T30, 2 g TES28, 0,15 g HCl (1 M), 250 ml Pentan. Die erhaltenen Granulate sind nicht hydrophob.

### Beispiel 17

Durchführung wie Beispiel 1 mit folgenden Einsatzmengen: 10 g GT3000 (GRACE), 1 g MTMS, 1 g DMDMS, 0,15 g HCl (1 M), 250 ml Pentan. Die erhaltenen Granulate sind hydrophob.

### Vergleichsbeispiel 1

Durchführung wie Beispiel 1 mit folgenden Einsatzmengen: 10 g HDK T30, 1g MTMS, 1 g DMDMS, 250 ml Pentan. Die erhaltenen Granulate sind nicht hydrophob und mechanisch wenig stabil.

Vergleichsbeispiel 2

Durchführung wie Beispiel 1 mit folgenden Einsatzmengen: 10 g HDK T30, 250 ml Pentan. Die erhaltenen Granulate sind nicht hydrophob und mechanisch nicht stabil.

**Analytische Daten**

| Bsp. | C-Gehalt [%] | Dichte (Pykno.) [g/cm³] | Dichte (Hg-Poro.) [g/cm³] | Porenvol. <4μm (Hg-Poro.) [cm³/g] | Anteil Poren <4μm an Gesamtporosität | λ-Wert [mW/K*m] | Mech. Stabilität |
|---|---|---|---|---|---|---|---|
| 1 | 2,6 | 0,15 | 0,16 | 3,52 | 61% | 19,9 | + |
| 2 | 2,6 | 0,16 | 0,21 | 3,43 | 80% | 20,3 | + |
| 3 | 2,8 | 0,18 | 0,19 | 3,48 | 72% | 20,5 | ++ |
| 4 | 4,1 | 0,21 | 0,26 | 2,74 | 81% | 21,4 | o |
| 5 | 3,3 | 0,17 | 0,19 | 3,31 | 69% | 19,6 | + |
| 6 | 2,6 | 0,18 | 0,17 | 3,45 | 64% | 20,1 | ++ |
| 7 | 2,7 | 0,16 | 0,18 | 3,64 | 71% | 20,2 | ++ |
| 8 | 2,2 | 0,26 | 0,27 | 3,04 | 94% | 21,8 | ++ |
| 9 | 2,2 | 0,28 | 0,29 | 2,81 | 94% | 20,1 | ++ |
| 10 | 3,4 | 0,18 | 0,19 | 3,32 | 69% | 20,4 | ++ |
| 11 | 1,5 | X | 0,19 | 3,79 | 79% | 20,8 | - |
| 12 | 3,0 | 0,18 | 0,19 | 3,37 | 70% | 20,9 | + |
| 13 | 3,7 | 0,21 | 0,21 | 3,21 | 75% | 20,8 | ○ |
| 14 | 2,5 | 0,15 | 0,17 | 3,47 | 64% | 20,7 | ++ |
| 15 | 2,3 | 0,20 | 0,20 | 3,45 | 76% | 20,3 | + |
| 16 | 0,6 | X | 0,14 | 4,28 | 64% | 20,1 | + |
| 17 | 2,4 | 0,26 | 0,24 | 2,62 | 71% | 27,6 | ○ |
| Vgl. 1 | 1,3% | X | 0,19 | 3,95 | 82% | X | - |
| Vgl. 2 | <0,1% | X | X | X | X | X | - |
| X: kein Wert bestimmt- | | | | | | | |

**Patentansprüche**

1.  Verfahren zur Herstellung von Silica Formkörpern mit einem C-Gehalt von unter 8 Gew.-%,
    einer Dichte, bestimmt durch Hg-Porosimetrie, von unter 0,30 g/cm³,
    einem Porenvolumen für Poren kleiner 4 μm bestimmt durch Hg-Porosimetrie von mehr als 2,0 cm³/g,
    einem Anteil der Poren kleiner 4 μm am Gesamtporenvolumen von wenigstens 60 % und
    einer thermischen Leitfähigkeit, bestimmt über eine instationäre Methode von unter 30 mW/K*m,
    bei dem

    i) eine Dispersion enthaltend Silica, mindestens einen Binder und ein organisches Lösungsmittel hergestellt wird, und
    ii) das Lösungsmittel aus der Dispersion verdampft wird, wobei die Formgebung der Silica Formkörper stattfindet.

2.  Verfahren nach Anspruch 1, bei dem hydrophile Kieselsäure oder ein Gemisch aus hydrophiler Kieselsäure und teilhydrophober Kieselsäure eingesetzt wird.

**3.** Verfahren nach einem oder mehreren der vorangehenden Ansprüche, bei dem als Binder Silane mit der organischen Gruppe $C_1$-$C_3$ Alkyl, gesättigt oder ungesättigt, und Methoxy- oder Ethoxygruppen eingesetzt werden.

**4.** Verfahren nach einem oder mehreren der vorangehenden Ansprüche, bei dem das Lösungsmittel ausgewählt wird aus Alkanen, Ethern und Alkoholen und deren Gemischen.

**5.** Silica Formkörper herstellbar nach dem Verfahren gemäß einem oder mehreren der vorangehenden Ansprüche.

**6.** Verwendung der Silica Formkörper gemäß Anspruch 5 zur thermischen oder akustischen Isolierung.

**Claims**

**1.** Process for producing shaped silica bodies having a C content of less than 8% by weight,
a density, determined by Hg porosimetry, of less than 0.30 g/cm$^3$,
a pore volume for pores smaller than 4 $\mu$m determined by Hg porosimetry of more than 2.0 cm$^3$/g,
a proportion of the pores smaller than 4 $\mu$m based on the total pore volume of at least 60% and
a thermal conductivity, determined by a non-steady-state method of less than 30 mW/K*m,
wherein

i) a dispersion containing silica, at least one binder and an organic solvent is produced, and
ii) the solvent is evaporated from the dispersion, with shaping to form the shaped silica bodies taking place.

**2.** Process according to Claim 1, wherein hydrophilic silica or a mixture of hydrophilic silica and partially hydrophobic silica is used.

**3.** Process according to one or more of the preceding claims, wherein silanes having the organic group $C_1$-$C_3$-alkyl, saturated or unsaturated, and, methoxy or ethoxy groups are used as binder.

**4.** Process according to one or more of the preceding claims, wherein the solvent is selected from among alkanes, ethers and alcohols and mixtures thereof.

**5.** Shaped silica body able to be produced by the process according to one or more of the preceding claims.

**6.** Use of the shaped silica body according to Claim 5 for thermal or acoustic insulation.

**Revendications**

**1.** Procédé de fabrication de corps moulés de silice ayant une teneur en C inférieure à 8 % en poids,
une densité, déterminée par porosimétrie Hg, inférieure à 0,30 g/cm$^3$,
un volume poreux pour les pores inférieurs à 4 $\mu$m, déterminé par porosimétrie Hg, supérieur à 2,0 cm$^3$/g, une proportion de pores inférieurs à 4 $\mu$m par rapport au volume poreux total d'au moins 60 %, et
une conductivité thermique, déterminée par une méthode instationnaire, inférieure à 30 mW/K*m,
selon lequel

i) une dispersion contenant de la silice, au moins un liant et un solvant organique est préparée, et
ii) le solvant est évaporé de la dispersion, le façonnage du corps moulé de silice ayant lieu.

**2.** Procédé selon la revendication 1, selon lequel une silice hydrophile ou un mélange d'une silice hydrophile et d'une silice partiellement hydrophobe est utilisé.

**3.** Procédé selon une ou plusieurs des revendications précédentes, selon lequel des silanes contenant un groupe organique alkyle en $C_1$-$C_3$, saturé ou insaturé, et des groupes méthoxy ou éthoxy, sont utilisés en tant que liant.

**4.** Procédé selon une ou plusieurs des revendications précédentes, selon lequel le solvant est choisi parmi les alcanes, les éthers et les alcools et leurs mélanges.

5. Corps moulé de silice pouvant être fabriqué par le procédé selon une ou plusieurs des revendications précédentes.

6. Utilisation du corps moulé de silice selon la revendication 5 pour l'isolement thermique ou acoustique.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2946476
- DE 102010003204 A1
- EP 1357156 B1
- DE 102012211121 A1
- DE 19729505 A1
- DE 19943103 A1
- DE 102007055879 A1
- EP 1433749 A
- EP 686676 A